## Europäisches Patentamt
## European Patent Office
### Office européen des brevets

(11) Veröffentlichungsnummer: **0 242 499**
**A1**

# (12) EUROPÄISCHE PATENTANMELDUNG

(21) Anmeldenummer: **87100101.2**

(22) Anmeldetag: **07.01.87**

(51) Int. Cl.4: **B65G 65/28**

(30) Priorität: **29.01.86 DE 3602561**

(43) Veröffentlichungstag der Anmeldung:
**28.10.87 Patentblatt 87/44**

(84) Benannte Vertragsstaaten:
**CH DE ES FR GB LI**

(71) Anmelder: **Klöckner-Humboldt-Deutz
Aktiengesellschaft
Deutz-Mülheimer-Strasse 111 Postfach 80 05
09
D-5000 Köln 80(DE)**

(72) Erfinder: **Riechelmann, Gundo, Dr.
Am Susewind 8
D-4322 Sprockhövel 2(DE)**
Erfinder: **Dorge, Gerhard
Weg zum Poeten 38
D-5804 Herdecke(DE)**

(74) Vertreter: **Beisner, Klaus, Dipl.-Ing. et al
c/o KHD Humboldt Wedag AG Patente und
Lizenzen Wiersbergstrasse Postfach 91 04
57
D-5000 Köln 91(DE)**

(54) **Portalkratzer mit Gelenkausleger.**

(57) Bei einem Portalkratzer zur Entspeicherung von Schüttgut auf einer Längs-oder Kreishalde innerhalb einer Haldenbegrenzungswand (2, 3) ist es nicht erforderlich, die Spitze des aus mindestens 2 gelenkig miteinander verbundenen Kratzern (5, 6) aufgebauten Auslegers gesondert zu führen. Bei ganz großen Halden reicht allenfalls eine Kreuzseilführung der Kratzer zur Unterstützung der Horizontalführung des Auslegers aus. Die Kratzer (5, 6), die an Seilen (10, 11) aufgehängt sind, benötigen zur Vertikalführung nur eine einzige Trommel (12).

EP 0 242 499 A1

1a

## Portalkratzer mit Gelenkausleger

Die Erfindung richtet sich auf eine Vorrichtung zum Entspeichern von Schüttgut aus einer Halde mit einer Haldenbegrenzungswand, enthaltend einen an einem Fahrportal hängenden, heb-und senkbaren Ausleger aus gelenkig miteinander verbundenen, an den gegenüberliegenden Haldenböschungen arbeitenden, in Förderrichtung einander nachgeschalteten Kratzern, der an der Abförderseite der Halde in einem Schwenklager am Farhportal gelagert ist, jeder Kratzer an wenigstens einem Seil hängt, der Ausleger mit seiner Spitze bei völlig abgeräumter Halde bis zur gegenüberliegenden Haldungsbegrenzungswand reicht und der Haldenboden zur Abförderseite hin soweit angehoben ist, daß der Kratzer dann näherungsweise parallel auf dem Haldenboden aufliegt.

Aus dem DE-GBM 76 15 310 ist ein Portalkratzer bekannt, dessen Ausleger aus zwei einander nachgeschalteten Kratzbalken besteht. Die Spitze des Auslegers wird durch eine an dem vorgeschalteten Kratzbalken angeordnete Längsführung mit einem Lenker vom Portal an der gegenüberliegenden Haldenbegrenzungswand aus gelenkbeweglich geführt. Eine solche Führung wird als erforderlich angesehen, wenn eine mit einer hochaufragenden Haldenbegrenzungswand versehene Halde entspeichert werden soll.

Es wurde nun gefunden, daß auf eine solche Führung verzichtet werden kann.

Gegenstand der Erfindung ist ein Portalkratzer, der dadurch gekennzeichnet ist, daß die Kratzer allein durch ihre Anlenkung an den in Förderrichtung nachgeschalteten Kratzern bzw. am Schwenklager horizontal geführt werden und die Seile zum vertikalen Bewegen der Kratzer an einer gemeinsamen Trommel angeschlagen sind.

Das Nachstellen der Neigung und Höhe der an dem Portal hängenden Kratzer an die fortschreitende Entspeicherung ist mit einem einzigen Windwerk möglich. Die Seilführung und die Ermittlung der Punkte, wo die Seile an den Kratzern befestigt werden müssen, ist beispielsweise an einem Modell zu ermitteln. Zusätzliche Winden lassen sich einsparen.

Durch den Verzicht auf die Führung der Spitze des Auslegers am Portal lassen sich vor allem Herstellungs-und Wartungskosten verringern, ohne daß deswegen die Lagerkapazität der Halde kleiner wird oder die vollständige Entspeicherung der Halde infrage gestellt wird.

Sollte bei einer besonders großen Halde eine verstärkte Horizontalführung vor allem des vordersten Kratzers am Ausleger gewünscht werden, kann anstelle der bekannten, nach Art einer Kulissenführung ausgebildeten, an der gegenüberliegenden Portalhälfte rollenden Führung gemäß einer Weiterbildung der Erfindung eine Kreuzseilaufhängung der Kratzer vorgesehen werden. Diese von Eimerkettenbaggern her bekannte Führung reicht zur Unterstützung der Horizontalführung aus und das Haldenräumgerät ist dennoch weniger aufwendig und störanfällig als die bekannte Längsführung der Auslegerspitze.

In der Praxis ist der Ausleger aus drei, bevorzugt nur aus 2 gelenkig miteinander verbundenen Kratzern aufgebaut. Beim Abbau einer gefüllten Halde arbeitet der Kratzer am Ende des Auslegers zunächst böschungsaufwärts. Unter den gegebenen Bedingungen, wie Portalhöhe, Haldenbreite, Höhe der Haldenbegrenzungsmauer, des Böschungswinkels des Schüttgutes u. ä. ist es das Bestreben, möglichst viel Schüttgut speichern zu können, was durch die Form des Auslegers beeinflußt werden kann. Oft wird es aureichen, den Ausleger mit zwei gleichen Kratzern auszubilden, wobei der Übergabestelle der Kratzer besondere Beachtung geschenkt werden muß (z. B. auch durch Stufen im Haldenboden) Es hat sich als besonders günstig herausgestellt, wenn der Kratzer an der Spitze des Auslegers kürzer ist als der (in Förderrichtung) nachgeschaltete Kratzer, weil dadurch eine Halde mit der maximalen Füllhöhe problemlos abgeräumt werden kann. Der auf der Abförderseite angebrachte, abwärtsfördernde Kratzer muß bis zur maximalen Haldenspitze reichen, weswegen der dann aufwärtsfördernde erste Kratzer verkürzt werden muß, damit die Gesamtauslegelänge nicht zu groß wird, wenn der Ausleger bei abgeräumter Halde genau bis zur gegenüberliegenden Wand reichen soll. Schon aus ökonomischen Gründen wird die Haldenbegrenzungswand nie höher als die halbe maximalmögliche Haldenhöhe sein, zumal ein Teil des Bodens erhöht werden muß, wenn die Halde mit zwei Kratzern vollständig abgeräumt werden soll, und durch die Erhöhung auch Speicherraum verloren geht.

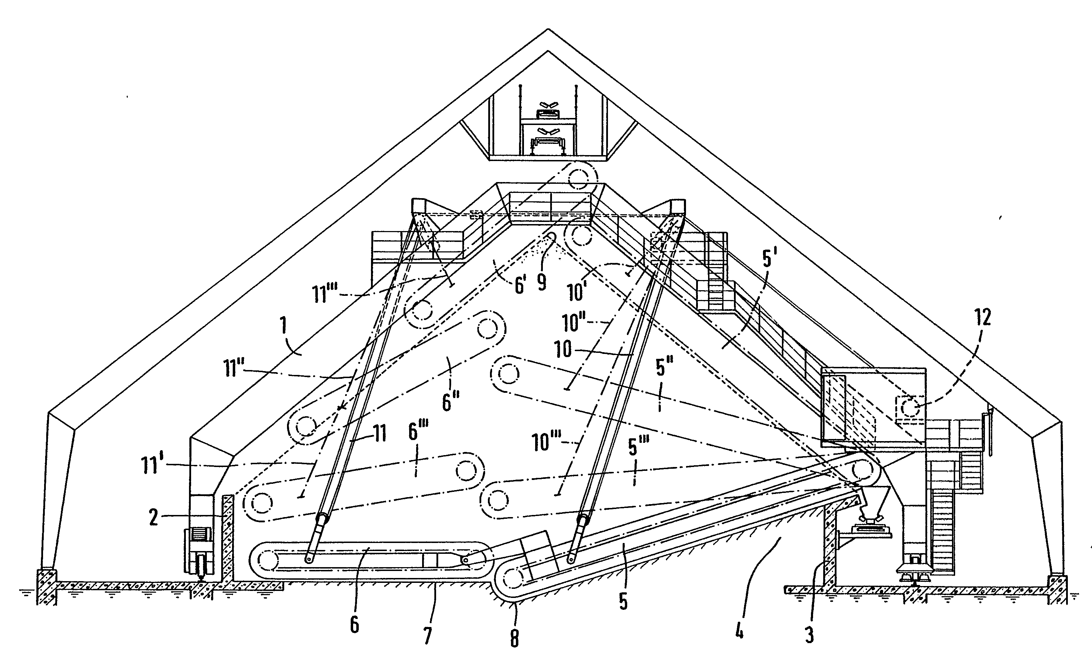

In der Zeichnung ist ein Ausführungsbeispiel der erfindungsgemäßen Entspeicherungsvorrichtung bei einer Längshalde dargestellt. Der Portalkratzer könnte auch bei einer Rundhalde eingesetzt werden, es wären lediglich Modifikationen an der Führung des Portals und an den Abtransportiereinrichtungen vorzunehmen.

Die unterhalb des Portals 1 liegende (hier nicht eingezeichnete) Schüttguthalde wird an ihren Seiten von Mauern 2, 3 begrenzt. Die erfindungsgemäße Abräumvorrichtung kann gleichwohl eingesetzt werden, wenn die Mauerhöhe gegen null geht. Die Auffüllung 4 ist erforderlich, damit die gesamte Halde abgeräumt werden kann. Der dadurch verlorene Raum ist umso größer, je länger der erste Kratzer auf der Abförderseite (vor allem bei Schüttgut mit hohen Böschungswinkeln) ist. Ein Ersatz des langen starren ersten Kratzers durch zwei gelenkbewegliche Kratzbänder umgeht dies Problem und läßt ein höheres Lagervolumen zu, hat aber einen erhöhten Herstellungsaufwand zur Folge.

In diesem Ausführungsbeispiel besteht der Ausleger aus zwei Kratzern 5, 6. Bei einer ganz abgeräumten Halde müssen die Kratzer 5, 6 parallel zum Haldenboden 7 verlaufen. Es ist hier eine Vertiefung 8 im Haldenboden 7 vorgesehen, durch die die Übergabe des Schüttgutes des Kratzers 6 auf den Kratzer 5 verbessert wird. Die Vertiefung 8 liegt hier nicht genau in der Mitte der Halde, sondern mehr auf die gegenüberliegende Wand 2 zu, weil der erste Kratzer 5 am Ausleger länger als der zweite Kratzer 6 ist. Der Kratzer 5 hat eine solche Länge, daß er bei voll aufgeschütteter Halde gerade bis zur Kammlinie 9 der Halde reicht. Bei voll aufgeschütteter Halde ist die Lager der beiden Kratzer 5 und 6 in der Figur mit 5' und 6' angedeutet. Entsprechend zeigen 5" und 6" bzw. 5'" und 6'" Zwischenstellungen der Kratzer am Ausleger bei teilabgeräumten Halden. Die Kratzer 5, 6 sind an Seilen 10, 11 (bzw. 10', 10", 10'", 11', 11", 11'") aufgehängt. Zur Bewegung aller Ausleger ist nur eine Seiltrommel 12 (ohne Zusatzwinden) erforderlich, an der alle Seile 10, 11 angeschlagen sind.

Auch bei einem aus mehr als zwei Kratzern aufgebauten Ausleger genügt eine Seiltrommel 12. Speziell bei einer Halde, die einen größeren horizontalen Bereich im First der Halde aufweist, ist es vorteilhaft, den Ausleger aus drei Kratzern zu bilden, wobei der mittlere Kratzer im wesentlichen waagerecht fördert. In diesem Fall ist es zweckmäßig, die Trommel stufenförmige auszuführen, wobei das Seil für den in Förderrrichtung ersten Kratzer auf einem Trommelteil mit einem kleineren Durchmesser und die beiden Seile des 2. und 3. Kratzers auf einem Teil mit größerem Durchmesser aufgewickelt werden.

Mit dieser Ausführung des Auslegers ist es auch bei großen Halden in einfacher Weise möglich, Schüttgut von Halden innerhalb einer Haldenbegrenzungswand vollständig zu entspeichern.

### Ansprüche

1. Vorrichtung zum Entspeichern von Schüttgut aus einer Halde mit einer Haldenbegrenzungswand, enthaltend einen an einem Fahrportal hängenden, heb-und senkbaren Ausleger aus gelenkig miteinander verbundenen, an den gegenüberliegenden Haldenböschungen arbeitender, in Förderrichtung einander nachgeschalteten Kratzern, der an der Abförderseite der Halde in einem Schwenklager am Fahrportal gelagert ist, jeder Kratzer an wenigstens einem Seil hängt, der Ausleger mit seiner Spitze bei völlig abgeräumter Halde bis zur gegenüberliegenden Haldenbegrenzungswand reicht und der Haldenboden zur Abförderseite hin soweit angehoben ist, daß der Kratzer dann näherungsweise parallel auf dem Haldenboden aufliegt, dadurch gekennzeichnet, daß die Kratzer (5, 6) alleine durch ihre Anlenkung an den in Förderrichtung nachgeschalteten Kratzern bzw. am Schwenklager horizontal geführt werden und die Seile (10, 11) zum vertikalen Bewegen der Kratzer (5, 6) an einer gemeinsamen Trommel (12) angeschlagen sind.

2. Vorrichtung nach Anspruch 1, dadurch gekennzeichnet, daß durch eine Kreuzseilaufhängung der Seile (10, 11) die Horizontalführung der Kratzer (5, 6) unterstützt wird.

3. Vorrichtung nach Anspruch 1 oder 2 dadurch gekennzeichnet, daß der Ausleger aus zwei Kratzern (5, 6) besteht.

4. Vorrichtung nach Anspruch 1 oder 2, dadurch gekennzeichnet, daß der Ausleger aus drei Kratzern besteht.

5. Vorrichtung nach Anspruch 3 dadurch gekennzeichnet, daß der in Förderrichtung erste Kratzer (6) kürzer als der an der Abförderstelle angelenkte Kratzer (5) ist.

6. Vorrichtung nach Anspruch 5 dadurch gekennzeichnet, daß der am Fahrportal angelenkte Kratzer (5) näherungsweise bis zur maximal möglichen Haldenspitze (9) reicht.

**EUROPÄISCHER RECHERCHENBERICHT**

Europäisches Patentamt

## EINSCHLÄGIGE DOKUMENTE

EP 87100101.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B - 1 804 052 (FA. GUSTAV SCHADE) <br> * Gesamt * <br> -- | 1,3 | B 65 G 65/28 |
| A | GB - A - 1 386 644 (GUSTAV SCHADE MASCHINENFABRIK) <br> * Fig. 2 * <br> ---- | 1,3 | |

| | RECHERCHIERTE SACHGEBIETE (Int. Cl.4) |
|---|---|
| | B 65 G |

Der vorliegende Recherchenbericht wurde für alle Patentansprüche erstellt.

| Recherchenort | Abschlußdatum der Recherche | Prüfer |
|---|---|---|
| WIEN | 27-04-1987 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82